**Europäisches Patentamt**

**European Patent Office**

**Office européen des brevets**

(11) Veröffentlichungsnummer: **0 121 691**
**B1**

(12) **EUROPÄISCHE PATENTSCHRIFT**

(45) Veröffentlichungstag der Patentschrift:
27.04.88

(51) Int. Cl.⁴: **F 16 L 11/10**, F 16 L 35/00

(21) Anmeldenummer: **84101554.8**

(22) Anmeldetag: **15.02.84**

(54) Sanitärschlauch.

(30) Priorität: **12.03.83 DE 8307226 U**

(43) Veröffentlichungstag der Anmeldung:
**17.10.84 Patentblatt 84/42**

(45) Bekanntmachung des Hinweises auf die Patenterteilung:
**27.04.88 Patentblatt 88/17**

(84) Benannte Vertragsstaaten:
**AT BE CH DE FR GB IT LI LU NL SE**

(56) Entgegenhaltungen:
**DE-A-1 425 453**
**DE-A-1 924 225**
**DE-A-2 832 763**
**DE-U-1 840 723**
**FR-A-1 499 956**
**US-A-1 009 465**

**DE-A-S 25 874 XII 47f (SUPERFLEXIT)**

(73) Patentinhaber: **Hans Grohe GmbH & Co KG,
Postfach 45, D-7622 Schiltach (DE)**

(72) Erfinder: **Stahl, Eugen Helmut, Königheimer
Strasse 12, D-7205 Böttingen (DE)**

(74) Vertreter: **Patentanwälte Ruff und Beier,
Neckarstrasse 50, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft einen Sanitärschlauch, insbesondere einen doppelwandigen Schlauch mit einem flexiblen Innenschlauch und einer den Innenschlauch umgebenden Verstärkungswendel, mit wenigstens einem Anschlußnippel und mit jeweils einer im Bereich der Schlauchenden in das Schlauchinnere eingesetzten Knickschutz-Drahtwendel, die sich nicht über die gesamte Länge des Schlauches erstreckt.

Bei Schläuchen, insbesondere dünnwandigen Schläuchen, ist immer wieder zu beobachten, daß an Biegestellen Einknickungen auftreten. Dies gilt insbesondere im jeweiligen Schlauchanschlußbereich, also unmittelbar im Bereich der Anschlußnippel. Solche Einknickungen haben zwangsläufig eine Verringerung des Strömungsquerschnittes und damit eine unerwünschte Durchflußminderung zur Folge. Auf die Dauer führen solche Einknickungen zu Ermüdungsbrüchen.

Es ist daher schon vorgeschlagen worden, in die Schlauchenden jeweils eine dünne Drahtwendel einzuschieben, deren in Einschubrichtung letzte Windung größer ist als der Innendurchmesser des Schlauches, so daß sie an der Stirnseite des Anschlußnippels zur Anlage kommt und eine Verschiebung der Drahtwendel innerhalb des Schlauches verhindert. Eine derartige Drahtwendel hat den Nachteil, daß sie leicht verloren gehen kann. Außerdem ist bei dem Einsatz einer derartigen Drahtwendel der Nachteil in Kauf zu nehmen, daß die in den Anschlußnippel einzulegende Dichtung nippelseitig wegen der in Einschubrichtung letzten Windung der Drahtwendel nicht plan aufliegen kann, was nicht selten zu Dichtproblemen führt.

Es ist ferner bereits vorgeschlagen worden (vgl. die DE-A-28 32 763), in die freien Schlauchenden eine dünne Drahtwendel einzuschieben, die nicht von ihrem rückwärtigen Ende, sondern vielmehr im Bereich ihres Einschubendes gehalten werden soll, wozu sie drei unterschiedlich gestaltete bzw. bemessene Bereiche aufweist. Das in Einschubrichtung vordere Drahtende dieser Drahtwendel ist nach innen gezogen und dort hakenförmig oder plattenförmig gestaltet, um einem Einschubwerkzeug als Auflage zu dienen. In dem sich daran anschließenden Wendelbereich ist wenigstens eine Windung vorgesehen, deren Außendurchmesser größer als der Innendurchmesser des Schlauches ist, so daß sich diese Windung etwas in die Schlauchwandung eindrückt. Daran schließt sich zum freien Schlauchende hin ein aus mehreren Windungen bestehender Wendelbereich an mit Windungen, die kleiner sind, als der Schlauchinnendurchmesser. Die Windungen dieses Bereiches sollen einem örtlichen Knicken des Schlauches entgegenwirken. Eine derartige Drahtwendel ist relativ aufwendig in ihrer Herstellung. Sie neigt bei Durchströmung des Schlauches auch zu Schwingungen. Außerdem kann der Schlauch durch die Reibung der Wendel in Gebrauch beschädigt werden.

Der Erfindung liegt die Aufgabe zugrunde, einen Schlauch der eingangs beschriebenen Art zu schaffen, bei dem die Knickschutz-Drahtwendel ohne großen Aufwand herstellbar und leicht einsetzbar sind und darüber hinaus einen einwandfreien Knickschutz bilden.

Diese Aufgabe wird erfindungsgemäß durch einen Schlauch gelöst, bei dem der Außendurchmesser der Knickschutz-Drahtwendel im entspannten Zustand größer ist, als der Innendurchmesser des Schlauches und bei dem die Knickschutz-Drahtwendel im wesentlichen über ihre gesamte Länge an der Schlauch-Innenseite unter Vorspannung anliegt, wobei die Länge der Knickschutz-Drahtwendel etwa der 2- bis 5-fachen Länge des Anschlußnippels entspricht.

Weist der Schlauch eine Verstärkungswendel auf, so entspricht die Ganghöhe der Knickschutz-Drahtwendel vorzugsweise der Ganghöhe der Verstärkungswendel, wobei die Windungen der Knickschutz-Drahtwendel vorzugsweise zwischen den Windungen der Verstärkungswendel verlaufen. Letzteres hat eine sichere Verankerung der Drahtwendel im Schlauchinneren zur Folge, ohne daß hierdurch Querschnittsverengungen in Kauf zu nehmen wären. Außerdem ist es nicht möglich, daß bei starker Knickung des Schlauches die Ganghöhe der Drahtwendel verändert und diese dadurch ebenfalls geknickt wird.

Der jeweils zum Schlauchende weisende Anfang der Knickschutz-Drahtwendel liegt beim erfindungsgemäßen Schlauch vorzugsweise innerhalb des Schlauchanschlußnippels, mit dem Vorteil, daß er leicht erfaßt werden kann, ohne hierdurch Dichtprobleme innerhalb des Nippels zu ergeben.

Bei einer bevorzugten Ausführungsform sind die beiden Drahtenden der Knickschutz-Drahtwendel jeweils radial nach innen umgebogen. Die umgebogenen Drahtenden weisen dabei vorzugsweise eine Länge auf, die im wesentlichen einem Viertel bis zur Hälfte des Schlauchinnendurchmessers entspricht. Die Drahtenden können auch oder zusätzlich ösenartig abgebogen oder abgerundet sein. Die radial nach innen umgebogenen Drahtenden erleichtern die Montage der Knickschutz-Drahtwendel sehr wesentlich, worauf in der nachfolgenden Beschreibung einer bevorzugten Ausführungsform noch gesondert hingewiesen wird.

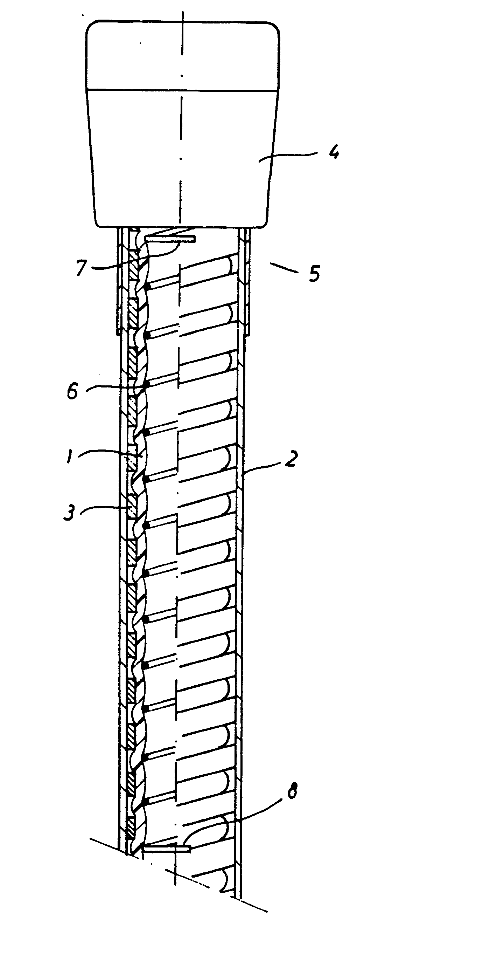

Weitere Einzelheiten, Merkmale und Vorteile der Erfindung ergeben sich aus den Ansprüchen und der nachfolgenden Beschreibung einer bevorzugten Ausführungsform im Zusammenhang mit der Zeichnung.

Die Zeichnung zeigt schematisch einen Längsschnitt durch ein Schlauchende, in das eine Knickschutz-Drahtwendel gemäß Erfindung eingesetzt ist.

Das dargestellte Schlauchende weist einen flexiblen Innenschlauch 1 und einen ebenfalls flexiblen, transparenten Außenschlauch 2 sowie eine zwischen den beiden Schläuchen angeordnete Verstärkungswendel 3 auf. Am Schlauchende ist ein von einer Überwurfmutter 4 hintergriffener Anschlußnippel 5 befestigt.

Im Innenschlauch 1 ist eine zylindrische Knickschutz-Drahtwendel 6 angeordnet, deren eines Drahtende innerhalb des Nippels 5 liegt und deren Länge bei der dargestellten Ausführungsform etwa dem Vierfachen der Nippellänge entspricht.

Die Ganghöhe der Knickschutz-Drahtwendel 6 entspricht der Ganghöhe der Verstärkungswendel 5. Die Windungen der Knickschutz-Drahtwendel 6 verlaufen zwischen den Windungen der Verstärkungswendel 5. Der Außendurchmesser der Knickschutz-Drahtwendel 6 ist größer als der Innendurchmesser des Innenschlauches 1, so daß der Innenschlauch 1 in den Bereichen zwischen den Windungen der Verstärkungswendel 5 von den Windungen der Knickschutz-Drahtwendel 6 nach außen gedrückt wird.

Die beiden Drahtenden 7, 8 der Knickschutz-Drahtwendel 6 sind jeweils radial nach innen umgebogen um einen Betrag, der bei der dargestellten Ausführungsform im wesentlichen der Hälfte des Innendurchmessers des Innenschlauches 1 entspricht.

Beim Einbau der Knickschutz-Drahtwendel 6, deren Außendurchmesser in entspanntem Zustand größer ist, als der Innendurchmesser des Innenschlauches 1, kann vorzugsweise folgendermaßen vorgegangen werden:

Zunächst wird ein zylindrisches Werkzeug, das einen der Länge der Knickschutz-Drahtwendel 6 entsprechend langen Axialschlitz und einen Außendurchmesser aufweist, der kleiner ist, als der Innendurchmesser der Knickschutz-Drahtwendel 6, so in das eine Ende der Knickschutz-Drahtwendel 6 eingeschoben, daß deren eines Drahtende 7 im Werkzeuglängsschlitz geführt wird. Ist dies geschehen, wird die Knickschutz-Drahtwendel 6 manuell "aufgezogen", d. h. gedreht, bis sie außen am Werkzeugschaft anliegt. Ist dies geschehen, wird das Werkzeug weiter in die Knickschutz-Drahtwendel 6 eingeschoben, bis auch deren anderes Drahtende 8 in den Werkzeugschlitz eingreift. Sodann wird das Werkzeug zusammen mit der aufgedrehten Knickschutz-Drahtwendel 6 in das Innere des Innenschlauches 1 eingeführt. Ist dies geschehen, so wird das Werkzeug zurückgezogen, wobei die Knickschutz-Drahtwendel 6 abgestreift wird. Zur Erleichterung dieses Vorgangs kann auf den Werkzeugschaft eine axial verschiebbare Hülse angebracht sein, die beim Herausziehen des Werkzeugschaftes stirnseitig gegen die Knickschutz-Drahtwendel 6 wirkt und ein Mitherausziehen der Knickschutz-Drahtwendel 6 verhindert. Sobald das Drahtende 8 der Knickschutz-Drahtwendel 6 außer Eingriff mit dem Werkzeugschlitz gebracht ist, entspannt sich die Knickschutz-Drahtwendel 6 wieder, d. h. ihr Außendurchmesser nimmt wieder zu unter Verformung des Innenschlauches 1. Die Knickschutz-Drahtwendel 6, deren Windungen jetzt zwischen den Windungen zur Verstärkungswendel 5 verlaufen, ist jetzt fest im Innenschlauch 1 verankert und kann ihre Aufgabe, ein Abknicken des Schlauches im Bereich des Anschlußnippels 5 zu verhindern, optimal erfüllen.

Die zylindrische Knickschutz-Drahtwendel liegt bis auf die abgebogenen Enden 7 und 8 vollständig an der Schlauchinnenwand an. Eine Axialverschiebung ist nicht zu befürchten. Andererseits macht die Wendel die Biegungen des Schlauches mit, ohne an diesem zu reiben.

Da die Wendel den Schlauch durch die Vorspannung an den Anlagestellen nach außen drückt, liegt, von den vernachlässigbaren Drahtenden 7 und 8 abgesehen, praktisch keine Verminderung des Durchflußquerschnittes vor.

Es ist auch möglich, die Knickschutz-Drahtwendel 6 einzusetzen bevor der Nippel 5 montiert ist, wobei die Knickschutz-Drahtwendel 6 dann zusammen mit dem Innenschlauch 1 zwischen den Hülsen des Nippels 5 eingeklemmt wird. Insbesondere dann ist nun das vom Nippel 8 abweisende Drahtende 8 umgebogen.


**Patentansprüche**

1. Sanitärschlauch, insbesondere doppelwandiger Schlauch mit einem flexiblen Innenschlauch (1) und einer den Innenschlauch umgebenden Verstärkungswendel (3), mit wenigstens einem Anschlußnippel (5) und mit jeweils einer im Bereich des Anschlußnippels (5) in das Schlauchinnere eingesetzten Knickschutz-Drahtwendel (6), die sich nicht über die gesamte Länge des Schlauches erstreckt, dadurch gekennzeichnet, daß der Außendurchmesser der Knickschutz-Drahtwendel (6) im entspannten Zustand größer ist als der Innendurchmesser des Schlauches, daß die Knickschutz-Drahtwendel (6) im wesentlichen über ihre gesamte Länge an der Schlauchinnenseite unter Vorspannung anliegt und daß die Länge der Knickschutz-Drahtwendel (6) etwa der 2- bis 5-fachen Länge des Anschlußnippels (5) entspricht.

2. Schlauch nach Anspruch 1, mit einer dem Innenschlauch umgebenden Verstärkungswendel, dadurch gekennzeichnet, daß die Ganghöhe der Knickschutz-Drahtwendel (6) der Ganghöhe der Verstärkungswendel (3) entspricht und die Windungen der Knickschutz-Drahtwendel (6) zwischen den Windungen der Verstärkungswendel (3) verlaufen.

3. Schlauch nach einem der vorhergehenden Ansprüche, dadurch gekennzeichnet, daß jeweils der zum Schlauchende weisende Knickschutz-Drahtwendel-Anfang (7) innerhalb des Anschlußnippels (5) liegt.

4. Schlauch nach einem der vorhergehenden Ansprüche, dadurch gekennzeichnet, daß die beiden Drahtenden (7, 8) der Knickschutz-Drahtwendel (6) jeweils radial mit nach innen umgebogen sind.

5. Schlauch nach Anspruch 4, dadurch gekennzeichnet, daß die umgebogenen Drahtenden (7, 8) der Knickschutz-Drahtwendel (6) eine Länge aufweisen, die im wesentlichen einem Viertel bis zur Hälfte des Schlauchinnendurchmessers entspricht.

6. Schlauch nach einem der vorhergehenden Ansprüche, dadurch gekennzeichnet, daß das nippelseitige Ende der Knickschutz-Drahtwendel (6) zusammen mit dem Innenschlauch (1) zwischen Hülsen des Nippels (5) eingeklemmt ist.


## Claims

1. Sanitary hose, particularly a double-walled hose with a flexible inner hose (1) and a reinforcing coil (3) surrounding the inner hose, with at least one connecting fitting (5) and with a kink-preventing wire coil (6) inserted into the hose interior in the vicinity of the connecting fitting (5), said wire coil not extending over the entire hose length, characterized in that the external diameter of the kink-preventing wire coil (6) in the relaxed state is larger than the internal diameter of the hose, that the kink-preventing wire coil (6) engages under pretension on the inside of the hose over substantially its entire length and that the length of kink-preventing wire coil (6) is approximately 2 to 5 times the length of the connecting fitting (5).

2. Hose according to claim 1, with a reinforcing coil surrounding the inner hose, characterized in that the pitch of the kink-preventing wire coil (6) corresponds to the pitch of the reinforcing coil (3) and the turns of kink-preventing wire coil (6) are located between the turns of reinforcing coil (3).

3. Hose according to one of the preceding claims, characterized in that the start (7) of the kink-preventing wire coil directed towards the hose end is located within the connecting fitting (5).

4. Hose according to one of the preceding claims, characterized in that the two wire ends (7, 8) of the kink- preventing wire coil (6) are in each case radially inwardly bent over.

5. Hose according to claim 4, characterized in that the bent over wire ends (7, 8) of the kink-preventing wire coil (6) have a length essentially corresponding to $\frac{1}{4}$ - $\frac{1}{2}$ the hose internal diameter.

6. Hose according to one of the preceding claims, characterized in that the fitting-side end of the kink- preventing wire coil (6) is fixed between the sleeves of fitting (5) together with inner hose (1).


## Revendications

1. Tuyau sanitaire, en particulier tuyau à double paroi avec un tuyau interne (1) flexible et une spirale de renforcement (3) entourant le tuyau interne, avec au moins un raccord (5) et avec, dans chaque zone de raccord (5), une spirale anti-pliures (6) en fil insérée à l'intérieur du tuyau et qui ne s'étend pas sur toute la longueur du tuyau, caractérisé en ce que le diamètre extérieur de la spirale anti-pliures (6) en fil métallique est, en détente, supérieur au diamètre intérieur du tuyau, en ce que la spirale anti-pliures (6) en fil métallique s'appuie essentiellement sur toute sa longueur contre la paroi interne du tuyau à l'état précomprimé, et en ce que la longueur de la spirale anti-pliure (6) en fil métallique correspond à environ 2 à 5 fois la longueur du raccord (5).

2. Tuyau selon la revendication 1, avec une spirale de renforcement entourant le tuyau intérieur, caractérisé en ce que le pas de la spirale anti-pliures (6) en fil correspond au pas de la spirale de renforcement (3), et en ce que les spires de la spirale anti-pliures (6) en fil métallique sont situées entre les spires de la spirale de renforcement (3).

3. Tuyau selon l'une des revendications précédentes, caractérisé en ce que chacun des commencements (7) de spirale anti-pliures en fil dirigé vers extrémité de tuyau est situé à l'intérieur d'un raccord (5).

4. Tuyau selon l'une des revendications précédentes, caractérisé en ce que chacune des extrémités (7, 8) de fil de la spirale anti-pliures (6) en fil est repliée radialement vers l'intérieur.

5. Tuyau selon la revendication 4, caractérisé en ce que les extrémités (7, 8) repliées de fil de la spirale anti-pliures (6) en fil présentent une longueur qui va essentiellement du quart à la moitié du diamètre intérieur du tuyau.

6. Tuyau selon l'une des revendications précédentes, caractérisé en ce que l'extrémité de la spirale anti-pliures (6) en fil située du côté du raccord est coincée en même temps que le tuyau intérieur (1) entre les gaines du raccord (5).